# EUROPEAN PATENT APPLICATION

(11) **EP 1 832 969 A2**
(43) Date of publication of application: **12.09.2007**
(21) Application number: 07102562.1
(22) Date of filing: 16.02.2007
(51) Int. Cl.: G06F 3/048

(54) **Method and apparatus for selection of a menu in a portable terminal**

(30) Priority: 10.03.2006 KR 20060022857
(71) Applicant: Samsung Electronics Co., Ltd., Suwon-si, Gyeonggi-Do (KR)
(72) Inventor: Kim, Hyun-Soo c/o Samsung Electronics Co., Ltd, Gyeonggi-do (KR); Kang, In-Kwon c/oSamsung Electronics Co,Ltd, Gyeonggi-do (KR); Sim, Dae-Hyun c/oSamsung Electronics Co,Ltd, Gyeonggi-do (KR); Chong, Seung-Eun c/oSamsung Electronics Co,Ltd, Gyeonggi-do (KR); Park, Jung-Hun c/oSamsung Electronics Co,Ltd, Gyeonggi-do (KR); Kwon, Kyung-Tack c/oSamsung Electronics Co,Ltd, Gyeonggi-do (KR); Suh, Yeo-Jung c/oSamsung Electronics Co,Ltd, Gyeonggi-do (KR)
(74) Representative: Grünecker, Kinkeldey, Stockmair & Schwanhäusser Anwaltssozietät

(57) **Abstract**

Provided is an apparatus and a method for selecting a menu in a portable terminal. The portable terminal includes a first input means (11) that can be rotated stepwise by a predetermined angle, a second input means (12) that can be continuously rotated and pressed, and a controller (15) for providing a menu list corresponding to the rotation direction of the first input means (11) and the number of steps of rotation of the first input means (11), changing the position of a cursor on the menu list according to the rotation direction and the rotation degree of the second input means (12), and performing an operation corresponding to a menu in which the cursor is located when the second input means (12) is pressed.

## Description

### BACKGROUND OF THE INVENTION

### 1. Field of the Invention

The present invention generally relates to a portable terminal, and in particular, to a method and apparatus for selecting a menu in a portable terminal.

### 2. Description of the Related Art

As portable terminals become more common, mobile communication terminals having various designs are being produced. Portable terminals typically include electronic devices having a size that allows a user to conveniently carry device with him/her, such as cellular phones, Personal Digital Assistants (PDAs), smart phones, Play Station Portable (PSP), Plug And Play (PNP), and navigation terminals. Portable terminals may also include a wrist-wearable-type portable terminal. The wrist-wearable-type portable terminal has a square or circular main body, an exterior Liquid Crystal Display (LCD) for displaying time information and other information associated with mobile communication, and key buttons in the outside of the main body or a watch strap. However, the wrist wearable type portable terminal includes a fewer and smaller buttons than other general type mobile communication terminals such as folder-type, sliding-type, or bar-type mobile communication terminal, by the nature of its structure. Moreover, as integration technology has been developed, the number of functions of a portable terminal and the number of menus corresponding to those functions increase. As such, since users manipulate the wrist wearable type portable terminal using a small number of key buttons, they may be inconvenienced when searching for and selecting a menu to implement a desired function.

### SUMMARY OF THE INVENTION

It is, therefore, an object of the present invention to provide a method and apparatus for selecting a menu, in which the convenience of a wrist wearable type portable terminal user can be improved.

This object is solved by the subject matter of the independent claims. Preferred embodiments are defined in the dependent claims.

It is another aspect of the present invention to provide a method and apparatus for searching for and selecting a menu in a wrist wearable type portable terminal.

According to one embodiment of the present invention, there is provided a portable terminal including a first input means that can be rotated stepwise by a predetermined angle, a second input means that can be continuously rotated and pressed, and a controller for providing a menu list corresponding to the rotation direction of the first input means and the number of steps of rotation of the first input means, changing the position of a cursor on the menu list according to the rotation direction and the rotation degree of the second input means, and performing an operation corresponding to a menu in which the cursor is located when the second input means is pressed.

### BRIEF DESCRIPTION OF THE DRAWINGS

The above object and other aspects, features and advantages of the present invention will become more apparent from the following detailed description when taken in conjunction with the accompanying drawings in which:
FIG. 1 is the perspective view of a wristwatch type portable terminal according to the present invention;
FIG. 2 is a block diagram of a portable communication terminal according to the present invention;
FIG. 3 is a flowchart illustrating the operation of a portable terminal according to the present invention; and
FIGs. 4A through 4C are screen shots illustrating display screens of a portable terminal according to the present invention.

### DETAILED DESCRIPTION OF THE PREFERRED EMBODIMENT

A preferred embodiment of the present invention will now be described in detail with reference to the annexed drawings. In the following description, a detailed description of known functions and configurations incorporated herein has been omitted for conciseness.

According to the present invention, menu selecting means in addition to key buttons are included in a main body of a wrist wearable type portable terminal. The menu selecting means are a kind of rotational data input means, which allow users wearing a portable terminal on their wrists to select a desired menu with easy manipulation.

More specifically, the portable terminal includes a body portion and a first input means rotatably attached thereto. The body portion also includes a display means which may include a liquid crystal display (LCD). The first input means is annularly shaped and may be rotated stepwise by a predetermined unit angle in a clockwise and/or counterclockwise direction. The portable terminal provides a plurality of menus at least one of which may be used to select another menu and/or submenu as desired by a user and may switch a menu according to stepwise rotation of the first input means. In particular, since the first input means is positioned along an outer periphery of the body portion of the portable terminal and encircles the LCD, users can selectively and/or stepwise rotate the first input means relative to the body portion. A sensing means for sensing a rotation state of the first input means is also included. The first input means may include an annular-shaped vessel which can support other input devices as will be described below. The vessel is rotatably attached (for example, in a clockwise and/or a counterclockwise direction) to the body portion of the portable terminal and may fix the glass (i.e., the crystal which may include a polymer, such as acrylic, a naturally occurring crystal, or glass) of a watch in a frame of the body portion.

A second input means according to the present invention is implemented with a rotational button. In other words, this button protrudes from the main body of the portable terminal and can be rotated clockwise and/or counterclockwise and be pressed. If the portable terminal senses rotation of the second input means, it changes the position of a cursor on a menu that is currently displayed on an LCD in response to the rotation. If the portable terminal senses the pressing of the second input means, it recognizes that a menu in which the cursor is currently located is selected and performs an operation corresponding to the selected menu. A sensing means for sensing a rotation state of the second input means is also included. The second input means may take a form of the stem of an analog wristwatch. The stem supplies power in conventional analog watches at the side of a main body of the watch and supplies power in a windup manner through rotation or is used to set time through rotation of the hour hand according to its rotation direction.

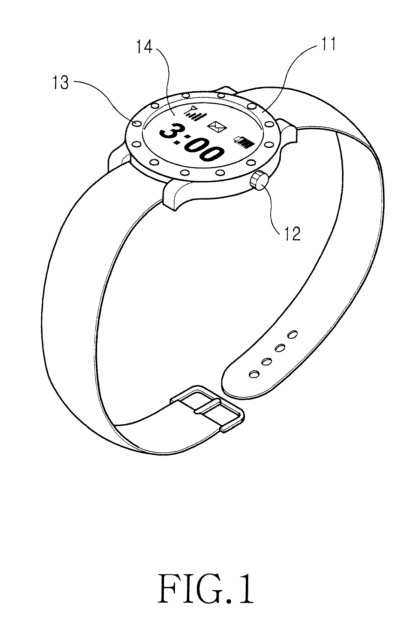

The appearance of a portable terminal implemented as a circular wristwatch according to the present invention is shown in FIG. 1 which is a perspective view of a wristwatch type portable terminal according to the present invention.

As shown in FIG. 1, the wristwatch type portable terminal includes a substantially round main body, a ring-shaped vessel 11 including the first input means surrounding an LCD screen 14, a plurality of general key buttons 13 located on the vessel 11, and a stem-type rotational button 12 as the second input means at a side of the main body.

Various information may be displayed to users in the form of a text or graphic image during the operation of the portable terminal. The vessel 11 is mounted to be rotated in a clockwise and/or counterclockwise direction. The vessel 11 includes the plurality of general key buttons 13 which serve as a keypad. The rotational button 12 may be rotated in a clockwise and/or a counterclockwise direction and can be pressed for input.

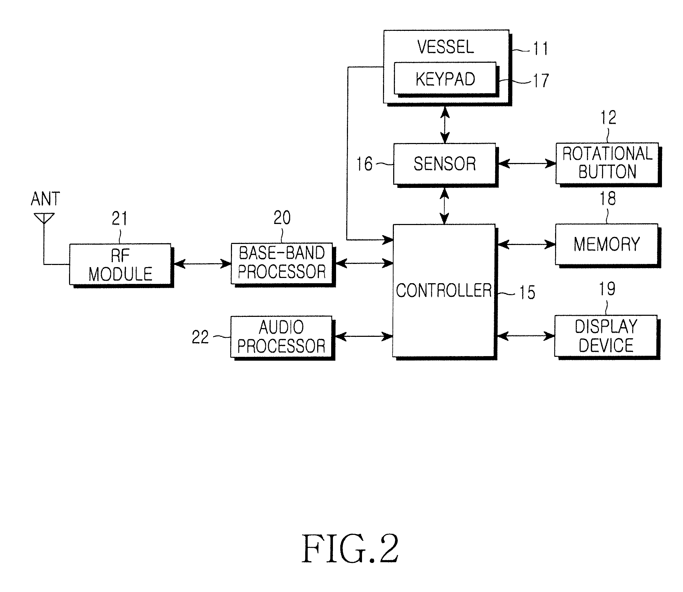

FIG. 2 is a block diagram of a portable mobile communication terminal according to the present invention.

Referring to FIG. 2, the portable mobile communication terminal includes a controller 15, a memory 18, a display device 19, the rotational button 12, the vessel 11, a keypad 17, a sensor 16, a base-band processor 20, a Radio Frequency (RF) module 21, and an audio processor 22.

The controller 15 controls the overall operation of the mobile communication terminal.

The display device 19 includes the LCD 14 and displays image information and images received from a mobile communication base station or stored in the memory 13 on the LCD 14 under the control of the controller 15.

The RF module 21 transmits radio signals to and/or receives radio signals from the mobile communication base station through an antenna. More specifically, the RF module 21 modules a transmission signal input from the controller 15 through the base-band processor 20 to transmit an RF signal through the antenna and demodulates an RF signal received through the antenna to transmit the demodulated RF signal to the controller 15 through the base-band processor 20. The base-band processor 20 processes a base-band signal transmitted and received between the RF module 21 and the controller 15.

The audio processor 22 connected to the controller 15 processes an audio signal input from the controller 15 and an audio signal input from a connector (not shown) connected to the audio processor 22 and outputs the processed audio signals to the connector and the controller 15. The mobile communication terminal implemented in the form of a wristwatch generally inputs and outputs the audio signals through an ear microphone connected through the connector.

The memory 18 stores programs for processing and controlling operations of the controller 15, reference data, and other storage data that can be updated and is used as a working memory of the controller 15. The memory 18 also stores data about menus corresponding to a plurality of functions of the portable mobile communication terminal. The plurality of functions can be classified into various mobile communication functions and user application functions. Main menus corresponding to each mobile communication function and each user application function and sub-menus corresponding to sub-functions associated with detailed user manipulation of each mobile communication function and each user application function may be provided. Accordingly, the user may first select a main menu to select a desired function to be executed in the portable mobile communication terminal and then selects a sub-menu of the selected main menu for execution of the desired function. A communication service, screen setting, volume setting, an electronic diary, entertainment, environment setting, a phonebook, and a camera menu may be taken as examples of the main menus. A message menu that is the main menu may include sub menus like a message box, new message, multi mail, emoticon, and e-mail. The volume setting menu may include sub menus such as ringtone setting, ring/vibration selection, volume, function sound setting, and hourly alert sound setting. These sub menus may include corresponding sub menus if necessary.

The vessel 11 is mounted to be rotated stepwise by a predetermined angle clockwise and/or counterclockwise and includes the keypad 17. The keypad 17 implemented on (and/or in) the vessel 11 includes the plurality of general key buttons 13 and outputs key input data generated by the input of each of the key buttons 13 to the controller 15.

The rotational button 12 in the form of the stem may be rotated in a clockwise and/or a counterclockwise direction and may be pressed for an input function.

The sensor 16 positioned under the vessel 11 includes a sensor for sensing the degree of rotation of the vessel 11 and outputting corresponding information to the controller 15 and a sensor connected to the rotational button 12 for sensing the degree of rotation of the rotational button 12 and outputs sensor data corresponding to rotation states of the vessel 11 and the rotational button 12 sensed by the sensors to the controller 15.

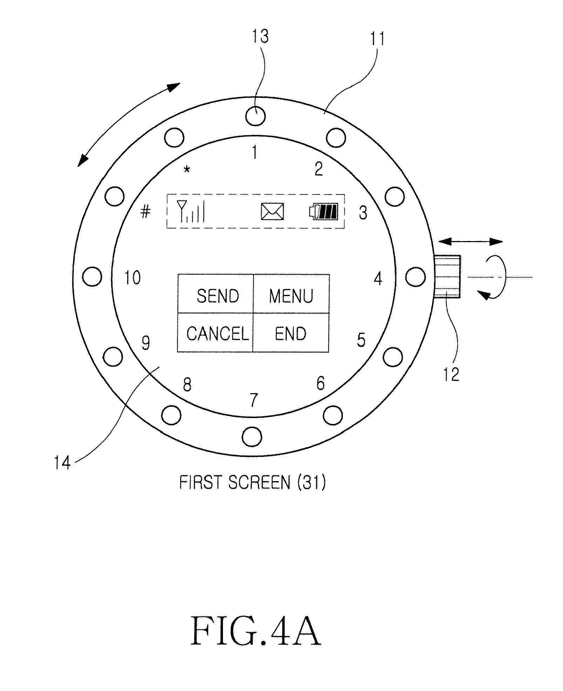

The controller 15 of the wristwatch-type portable terminal displays an indicator indicating time information and the state of the portable terminal on the LCD display 14 in the sleep mode, as shown in FIG. 1. If user input is sensed, e.g., the input of the general key button 13 and/or the rotation of the vessel 11, the controller 15 releases the sleep mode and displays numbers 0 through 9 and special characters * and # in positions corresponding to the general key buttons 13 on the LCD 14 as in a first screen 31 of FIG. 4A. FIGs. 4A through 4C illustrate display screens of the portable terminal according to the present invention. The controller 15 displays a plurality of key images, e.g., key images corresponding to a send key, a menu key, a cancel key, and an end key, on the LCD 14. A desired number, character, etc., may be selected by depressing a corresponding key button 13 positioned adjacent (or character etc.) to the number. Upon the input of the general key button 13, the keypad 17 outputs key input data corresponding to the input key button 13 to the controller 15. Thus, the controller 15 senses the input of the key button 13 and displays the number corresponding to the input key button 13 on the LCD 14.

If users desired to select one of the displayed key images, they may use the rotational button 12. If the users rotate the rotational button 12, the sensor 16 senses the rotation of the rotational button 12 and outputs sensor data corresponding to the sensed degree of rotation to the controller 15. The controller 15 moves a cursor on the key image according to the input sensor data. For example, if the rotational button 12 is rotated counterclockwise, the controller 15 moves the cursor counterclockwise and thus, the key image in which the cursor is located is also rotated counterclockwise. If the users press the rotational button 12, the sensor 16 outputs corresponding sensor data to the controller 15. The controller 15 then performs an operation corresponding to the key image in which the cursor is located according to the input sensor data.

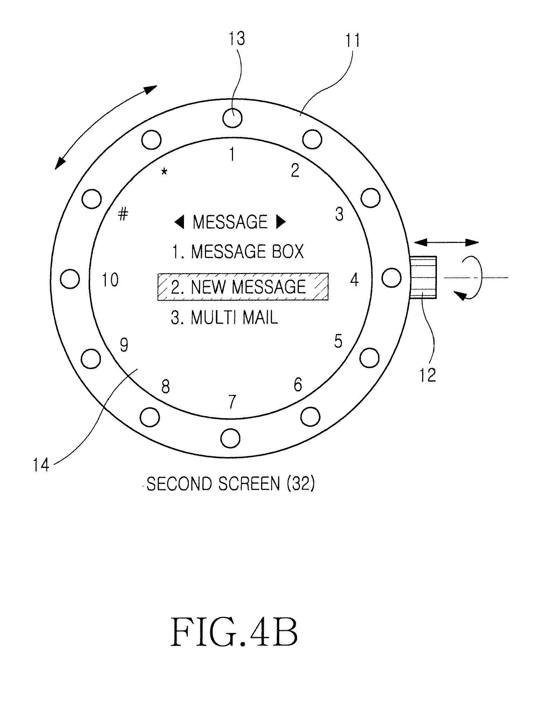

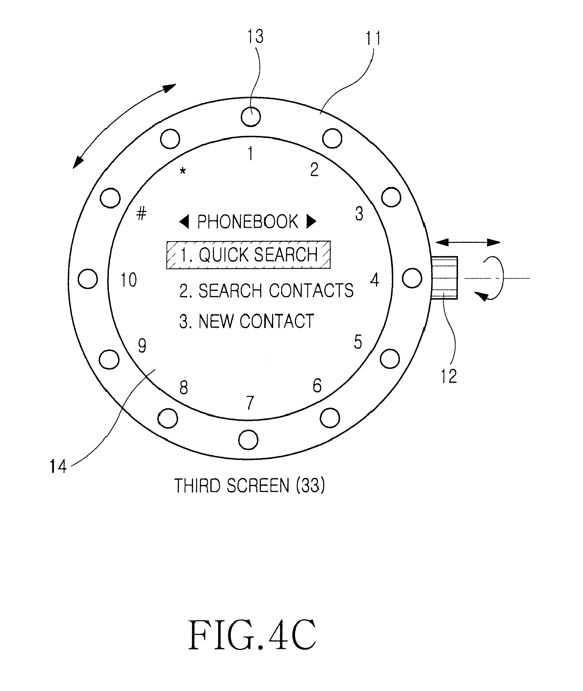

If a menu key image is selected in the above-described manner, the controller 15 sets a menu selection mode. The controller 15 may also set the menu selection mode in response to the rotation of the vessel 11. In other words, if the rotation of the vessel 11 is sensed after the sleep mode is released, the controller 15 sets the menu selection mode. When setting the menu selection mode, the controller 15 displays one of a plurality of main menus and a sub-menu list of the main menu on the LCD 14. At this time, the numbers and special characters are displayed in positions corresponding to the general key buttons 13 as shown in FIG. 4A. The main menu displayed in initial setting of the menu selection mode may be one that comes first in a preset order or was provided immediately before the termination of a previous menu selection mode. After the menu selection mode is set, the LCD display 14 is as shown in FIGs. 4B and 4C. A second screen 32 of FIG. 4B displays a message main menu and a third screen 33 of FIG. 4C displays a phonebook main menu.

A user may rotate the vessel 11 to select a desired main menu in a state where the menu selection mode is set. The controller 15 switches and displays a main menu corresponding to the rotation direction of the vessel 11 and/or the number of steps of rotation of the vessel 11 sensed by the sensor 16. For example, if the vessel 11 is rotated clockwise, the controller 15 switches and displays a main menu sequentially in an ascending order of a main menu providing order according to a rotation step number. Likewise, if the vessel 11 is rotated counterclockwise, the controller 15 switches and displays a main menu sequentially in a descending order of the main menu providing order according to a rotation step number.

The users may use the rotational button 12 to select one of sub menus when a main menu and a sub menu list of the main menu are displayed. The controller 15 recognizes the rotation direction of the rotational button 12 through the sensor 16 and changes the position of the cursor on a sub menu according to the rotation direction. Thereafter, if user's pressing of the rotational button 12 is sensed, the controller 15 performs an operation corresponding to a sub menu in which the cursor is currently located. For example, if the rotation of the rotational button 12 is sensed when sub menus of the message main menu are displayed as in the second screen 32, the controller 15 moves the cursor from the "1. Message box" sub menu to the "3. Multi mail" sub menu according to the rotation direction. If the rotation of the rotational button 12 is continuously sensed, the controller 15 scrolls other sub menus that are not shown in the second screen 32 and displays the sub menus and the cursor on the LCD screen 14. Thereafter, if the pressing of the rotational button 12 is sensed when the cursor is located in the "2. New message" sub menu as in the second screen 32, the controller 15 performs an operation corresponding to the "2. New message" sub menu and displays a message input window. Selection of a sub menu may also be made by the input of the general key button 13 corresponding to a number indicating the order of the sub menu.

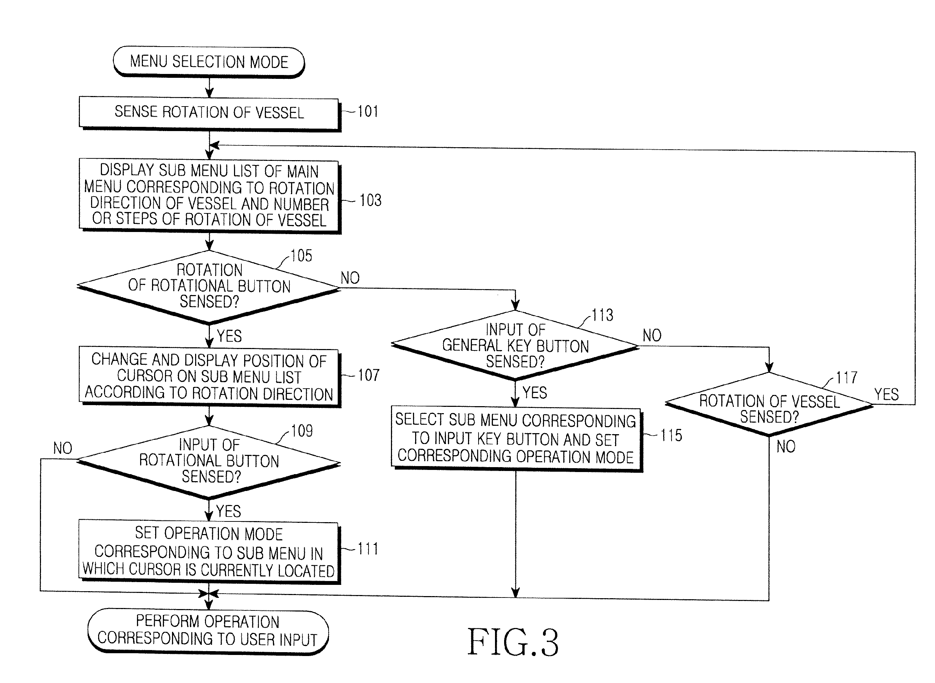

The operation of the controller 15 is shown in FIG. 3 which is a flowchart illustrating the operation of a portable terminal according to the present invention.

If the rotation of the vessel 11 is sensed in step 101 when the menu selection mode is set, the controller 15 goes to step 103. The controller 15 displays a sub menu list of a main menu corresponding to the rotation direction of the vessel 11 and/or the number of steps of rotation of the vessel 11 in step 103 and then proceeds to step 105. If the rotation of the rotational button 12 is sensed in step 105, the controller 15 goes to step 109. If the rotation of the rotational button 12 is not sensed, the controller 115 goes to step 113. The controller 15 checks if the pressing of the rotational button 12 is sensed in step 107. If the pressing is sensed, the controller 15 goes to step 111. The controller 15 sets an operation mode corresponding to a sub menu in which the cursor is currently located in step 111 and then performs an operation corresponding to a user input.

If the user input is not the input of the rotational button 12 in step 105, the controller 15 goes to step 113 to check if the user input is the input of the general key button 13. If the user input is the input of the general key button 13, the controller 15 goes to step 115. The controller 15 selects a sub menu corresponding to the input key button 13 to set a corresponding operation mode in step 115 and performs an operation corresponding to a user input.

If the user input is not the input of the general key button 13 in step 113, the controller 15 goes to step 117 to check if the rotation of the vessel 11 is sensed. If the rotation of the vessel 11 is sensed, the controller 15 goes to step 103.

As such, according to the present invention, for menu selection, wrist-wearable-type portable terminal includes the ring-shaped first input means that is mounted on a main body to be rotated stepwise by a predetermined angle clockwise and/or counterclockwise and the second input means that protrudes from the main body and can be rotated clockwise and/or counterclockwise and be pressed, in addition to key buttons. Thus, the portable terminal switches a menu and provides different menus according to stepwise rotation of the first input means, thereby allowing a user to select a desired menu. Upon sensing the rotation of the second input means, the portable terminal changes the position of the cursor on a menu that is currently displayed on an LCD according to the rotation. Upon sensing the pressing of the second input means, the portable terminal recognizes that the menu in which the cursor is currently located is selected and performs an operation corresponding to the selected menu, thereby facilitating user's menu selection.

While the present invention has been shown and described with reference to a preferred embodiment thereof, it will be understood by those skilled in the art that various changes in form and details may be made therein without departing from the scope of the invention. For example, the portable terminal may be configured to set a menu selection mode if the input of the vessel 11 is sensed even if an operation mode is set.

## Claims

1. A portable terminal comprising:
a first input means (11) that can be rotated stepwise by a predetermined angle;
a second input means (12) that can be continuously rotated and pressed; and
a controller (15) for:
providing a menu list corresponding to the rotation direction of the first input means (11) and the number of steps of rotation of the first input means (11): changing a position of a cursor on the menu list according to the rotation direction and the rotation degree of the second input means (12); and
performing an operation corresponding to a menu in which the cursor is located when the second input means (12) is pressed.

2. The portable terminal of claim 1, further comprising a sensor (16) for sensing the rotation direction of the first input means (11) and the number of steps of rotation of the first input means (11), and at least one of the rotation direction and the rotation degree of the second input means (12).

3. The portable terminal of claim 1, wherein the first input means (11) is mounted along the outer periphery of the portable terminal.

4. The portable terminal of claim 1, wherein the second input means (12) is mounted at a side of the portable terminal.

5. The portable terminal of claim 1, wherein the first input means (11) includes a plurality of key buttons (13).

6. A method for selecting a menu in a portable terminal, the method comprising the steps of:
displaying a menu list in response to a stepwise rotation of a first element (11) a predetermined angle;
changing the position of a cursor on the menu list, in response to continuously rotating a second element (12); and
performing an operation corresponding to a menu in which the cursor is located in response to a depression of the second element (12).

7. The method of claim 6, wherein the displaying step comprises displaying the menu list corresponding to a direction of rotation and/or a number of steps of rotation of the first input means (11).

8. The method of claim 6, wherein the changing step comprises changing the position of the cursor according to direction and amount of angular rotation.

9. The method of claim 7, wherein the first element (11) is situated about a display (19) and rotates about an axis which extends substantially normal to the display (19).

10. A wristwatch-type portable terminal comprising:
a first input means (11) that is mounted along the outer circumference of a main body such that the first input means (11) can be rotated stepwise by a predetermined angle;
a second input means (12) rotating about an axis, the second input means (12) being mounted at a side of the main body such that is can be rotated about the axis in a continuous fashion and can be pressed in a direction that is parallel to the axis; and
a controller (15) for displaying a corresponding menu list for each stepwise rotation of the first input means (11), changing the position of a cursor on the menu list according to a rotation of the second input means (12), and performing an operation corresponding to a menu in which the cursor is located according to the pressing of the second input means (12).

11. The wristwatch type portable terminal of claim 9, wherein the first input means (11) is a vessel mounted along the outer circumference of a wristwatch.

12. The wristwatch type portable terminal of claim 9, wherein the second input means (12) is a stem mounted to protrude from a side of the wristwatch.
